# EUROPEAN PATENT SPECIFICATION

(11) **EP 1 162 602 B1**
(45) Date of publication and mention of the grant of the patent: **15.12.2004**
(21) Application number: 00112234.0
(22) Date of filing: 07.06.2000
(51) Int. Cl.: G10L 15/00, G10L 15/08

(54) **Two pass speech recognition with active vocabulary restriction**
Spracherkennung in zwei Durchgängen mit Restriktion des aktiven Vokabulars
Reconnaissance de la parole en deux passes avec restriction du vocabulaire actif

(43) Date of publication of application: 12.12.2001
(73) Proprietor: Sony International (Europe) GmbH, 10785 Berlin (DE)
(72) Inventor: Di Profio, Ugo, Advanced Techn.Center Stuttgart, 70327 Stuttgart (DE)
(74) Representative: Müller - Hoffmann & Partner

(56) References cited:
- EP-A- 0 834 862
- WO-A-00/58945
- US-A- 5 704 005
- GEUTNER P ET AL: "Adaptive vocabularies for transcribing multilingual broadcast news" PROCEEDINGS OF THE 1998 IEEE INTERNATIONAL CONFERENCE ON ACOUSTICS, SPEECH AND SIGNAL PROCESSING, ICASSP '98 (CAT. NO.98CH36181), SEATTLE, WA, USA, 12-1, pages 925-928 vol.2, XP002152328 1998, New York, NY, USA, IEEE, USA ISBN: 0-7803-4428-6
- HATTORI H ET AL: "Speech recognition using sub-word units dependent on phonetic contexts of both training and recognition vocabularies" PROCEEDINGS ICSLP 96. FOURTH INTERNATIONAL CONFERENCE ON SPOKEN LANGUAGE PROCESSING (CAT. NO.96TH8206), PHILADELPHIA, PA, USA, 3-6 OCT. 1996, pages 2309-2312 vol.4, XP002152329 1996, New York, NY, USA, IEEE, USA ISBN: 0-7803-3555-4
- DATABASE INSPEC [Online] INSTITUTE OF ELECTRICAL ENGINEERS, STEVENAGE, GB; ALBARELLO A ET AL: "Implementation of an acoustical front-end using the TMS32020" Database accession no. 3636201 XP002152330 & DIGITAL SIGNAL PROCESSING - 87. PROCEEDINGS OF THE INTERNATIONAL CONFERENCE, FLORENCE, ITALY, 7-10 SEPT. 1987, pages 245-249, 1987, Amsterdam, Netherlands, North-Holland, Netherlands ISBN: 0-444-70297-0
- PACAK; PRATT; WHITE: "Automated morphosyntactic analysis of medical language" INFORMATION PROCESSING AND MANAGEMENT, vol. 12, 1976, pages 71-76, UK

## Description

The present invention is related to Automatic Speech Recognition and Understanding (ASRU), in particular to a method to recognize speech phrases and a speech recognizer capable of working according to such a method.

In an ASRU system, first the analog speech signal is converted into a digital one, then a features extraction is performed to obtain a sequence of feature vectors. Regardless of the recognition technology used, an ASRU system tries to match one of the words it has in its own vocabulary to the sequence of obtained feature vectors.

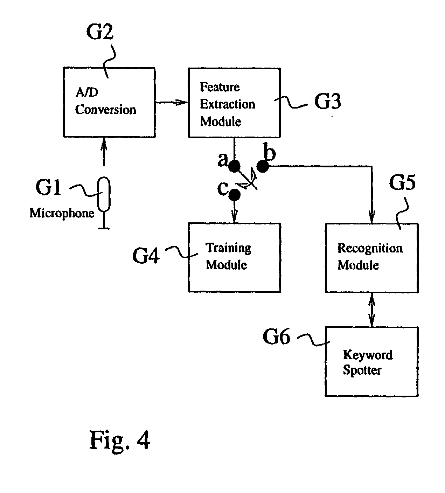

A functional block diagram showing a simplified example of a common speech recognition system is depicted in Fig. 4. A speech utterance is input to the speech recognition system via a microphone G1 which outputs an analog speech signal to an A/D-converter G2. The digital speech signal generated by the A/D-converter G2 is input to a feature extraction module G3 which produces a sequence of feature vectors. Depending on whether the speech recognition system is in training mode or recognition mode the sequence of feature vectors from the feature extraction module G3 is input to a training module G4 or a recognition module G5. The recognition module G5 is bi-directionally connected to a keyword spotter G6.

In the training mode the training module G4 assigns the sequence of feature vectors from the feature extraction module G3 to known utterances, i. e. known words to create an own vocabulary of the speech recognition system. Depending on the system such a vocabulary can generally or user-dependent be newly created and/or can be based on a predefined database.

In recognition mode the recognition module G5 tries to match one of the words of the own vocabulary of the speech recognition system to the sequence of feature vectors generated by the feature extraction module G3. The keyword spotter G6 serves to reduce the vocabulary for a following recognition in case the current recognition revealed a keyword, as it will be discussed in the following.

From a speech recognition point of view, the larger the vocabulary the harder the task to find a reliable match since several words can have comparable score for the match. From a speech understanding point of view not all words in the user's utterance have the same importance, since usually only some of them convey a relevant meaning in the specific context.

Any techniques which can reduce vocabulary size and/or locate words with relevant meanings, can help the ASRU system to perform better, for example within an ASRU for car navigation, words with a relevant meaning are city names, street names, street numbers, etc. Given the user's utterance, language based parsing techniques can be used to select the more likely relevant words according to a grammar. Still, a large vocabulary has to be processed for recognition, e. g. the list of all city names plus all street names plus numbers. In order to keep the vocabulary as small as possible, in case a word can be recognized by the keyword spotter G6 the recognition of the following word can be performed on basis of a restricted category-based vocabulary.

Such keyword spotting might detect words like "to go" and "street" and then restrict vocabulary to street names only when recognizing other words in the same utterance. Keyword spotting is based on speech recognition as well, but vocabulary size is small, i. e. the list of keywords and similar scored words are usually not critical for the recognition task involved in their detection.

Keyword spotting is a method primarily for task oriented ASRU systems, e. g. timetable information systems, to perform first level analysis of user's input in order to focus and then improve the recognition task. The basic idea here is to detect special words - taken from a relatively small list when compared to a full vocabulary - in the user's utterance and then make assumptions on the informative content of the sentence. Then the recognition task of content words can be simplified, for example reducing vocabulary only to those words consistent with the assumptions. EP 0 601 778 discloses a state of the art technique to implement keyword spotting.

However, in some applications and for isolated speech recognition systems, keyword spotting could not be enough to reduce the vocabulary used for the recognition of content words to such a size that a reliable recognition can be achieved. For example, in a car navigation application even if it is known that an unknown word is a street name, the restricted vocabulary size - a list of all street names for a given area - could be too large for a reliable recognition. Moreover, user's utterance comprised of a single word can be very difficult to even categorize, since more than one aspect can be equally likely conveyed by such a word in the given context.

A common solution of this problem is to start a dialogue in which the system takes initiative and asks the user for more information in order to better focus the recognition task. For example, in the car navigation domain the system could ask the user to specify the postal code of the destination in order to restrict the vocabulary to those streets which belong to that postal code area.

A further solution to this problem is disclosed in EP 0 655 732 A2 which discloses a soft decision speech recognition which takes advantage of the fact that a user of a given speech recognition system is likely to repeat a phrase (whether prompted or not) when a first utterance of the same phrase has not been recognized by the given system. The first utterance is compared to one or more models of speech to determine a similarity matrix for each such comparison and the model of speech which most closely matches the first utterance is determined based on the one or more similarity matrix. Thereafter, the second utterance is compared to one or more models of speech associated with the most closely matching model to determine a second utterance similarity matrix for each such comparison. The recognition result is then based on the second utterance similarity matrix.

A further solution is proposed in US 5,712,957 according to which disclosed method of repairing machine-recognized speech a next best recognition result is computed in case the first recognition result is identified as incorrect.

However, all these proposed solutions to improve the recognition task work not automatically, but require a user interaction which is cumbersome for the user.

Another approach is described in document "Adaptive Vocabularies for Transcribing Multilingual Broadcast News" by P. Geutner et al., in proceedings of the 1998 IEEE International Conference on Acoustics, Speech and Signal Processing, ICASSP '98. In this document, a large vocabulary speech recognition system is presented, wherein the recognition process is performed in two steps. In both recognition steps, the size of the vocabulary is the same.

Further, the document "Automated Morphosyntactic Analysis of Medical Language" by M.G. Pacak and A.W. Pread, Information Processing and Management, UK, 1976, vol. 12, pages 71 to 76, discloses an automated procedure for morphosyntatic analysis of medical English based on the recognition of terminal suffixes as syntactic markers. In addition, certain suffixes convey semantic information about a semantic category to which a word may belong. The determination of syntactic and semantic information is thereby performed on a word level.

It is the object underlying the present invention to provide an improved automatic method to recognize speech phrases and an enhanced speech recognition system, i.e. a speech recognition system capable of improving recognition results without user interaction.

This object is solved by a method to recognize speech phrases according to independent claim 1. Claims 2 to 4 define preferred embodiments thereof.

A speech recognizer according to the present invention is defined in independent claim 5. Preferred embodiments thereof are defined in claims 6 to 7.

To help both speech recognition and understanding, according to the present invention keyword spotting techniques are applied to key-subwords in order that a selective reduction of vocabulary size can be achieved. Preferably, this technique is intended to be applied for the task of isolated word recognition. Furthermore, this technique can be applied regardless of the specific recognition technology in use. Therefore, given an unknown word, multiple stages recognition is performed, while applying key-subword spotting at a certain stage to reduce the size of vocabulary to be used in the following stage. In other words, according to the present invention, key-subwords are detected in the unknown word and then a vocabulary containing only words comprising those key-subwords is used in the following stage. Of course, the procedure can be applied more than once.

To be more specific, given an unknown word uw the recognition process according to a preferred embodiment of the invention can be split into two stages:
- a first stage recognition is performed; then, key-subword spotting is applied to the result of recognition in order to try to determine the category which applies to uw;
- if a category is detected, to produce a recognition result a second stage recognition is performed on the same speech input, e. g. on basis of the sequence of feature vectors corresponding to uw, which can be buffered, but using a restricted vocabulary comprising only those words belonging to the category determined in the first step;
- if a category is not detected, the result of the first recognition stage is used as recognition result.

Alternatively, the first stage recognition can be omitted when the key-subword spotting is supplied with the functionality to recognize key-subwords e.g. based on an output of a lower level recognition engine, since in this case a first stage recognition which produces a recognition result for the received utterance is not necessary. Also in this case the second stage recognition is performed using a restricted vocabulary.

By category e. g. the set of words is meant which comprise the key-subword.

For example, in the car navigation domain, first stage recognition of the user's utterance *"Zeppelinstrasse"* could result in the set of hypothesis {"*Zeppelinstrasse*", "Zollbergsteige", "*Zeppenfeldtgasse*", "*Zimmersteige*", "*Zepplinstrasse*"}*.* Applying key-subword spotting and detecting *strasse* as the street type, i. e. the category, a restricted vocabulary generated from a general vocabulary by using all words containing *strasse* as affix, here e.g. {*"Zeppelinstrasse", "Zepplinstrasse*"} if no further words of the general vocabulary have this affix, can be used in the second stage of recognition.

Alternatively or additionally, category e. g. defines the same domain, e. g. key-subwords such as *"bach", "burg",* etc. might identify an unknown word as a city name and a vocabulary comprising cities only would be used for recognition, since *"bach"* and *"burg"* are common affixes for German city names.

Therewith, information about word category is used to help the understanding task, especially in single-word-utterance cases. For example, in a spoken dialogue system for address input in the car navigation domain when the context of the system is Street Name Input, i. e. the system expects the user to input a street name, but the user utters the word *"Fellbach"*. According to the present invention, it is possible to detect the category *"bach"* and possibly surmise (understand) that a city name has been input instead of a street name.

Therewith, according to the present invention, current system's performances are enhanced by reducing resource requirements. In particular:
- downsized vocabulary accounts for a smaller search space which additionally requires less memory for storage
- smaller search space requires less processing power and results in faster system's response.

Alternatively, recognition accuracy can be improved by key-subword spotting if system resources are kept constant.

Of course, the present invention can also be applied several times to the same speech phrase, e. g. in that first syllables of a word, then the word itself and thereafter a sentence of several words is recognized according to the proposed method. In case of phrase or sentence recognition according to the present invention not only the reconfiguration/reduction of vocabulary can be performed, but also the reconfiguration or proper selection of the language model used by the speech recognizer.

Since the speech recognition system according to the present invention is not dependent on the low-level speech recognition, as mentioned above, it can advantageously be combined with other speech recognition systems which determine recognition results automatically and/or user-interactive to improve their performance. In particular, such a combination can advantageously be provided in the first-stage recognition.

The invention and the underlying concept will be better understood from the following description of an exemplary embodiment thereof taken in conjunction with the accompanying drawings, in which
- **Fig. 1**: depicts the principle block diagram of a speech recognizer according to the present invention;
- **Fig. 2**: shows a flow-chart of the speech recognition method according to the present invention;
- **Fig. 3**: shows a detailed block diagram of a speech recognition system according to the present invention; and
- **Fig. 4**: shows an example of a speech recognition system according to the prior art.

In the following description an exemplary embodiment according to the present invention is described which shows the recognition of an unknown word. Therefore, the general vocabulary used for the recognition process also consists of words and the key-subword detection according to the present invention detects parts of words. In the following description the same reference numbers are used for the same or like elements.

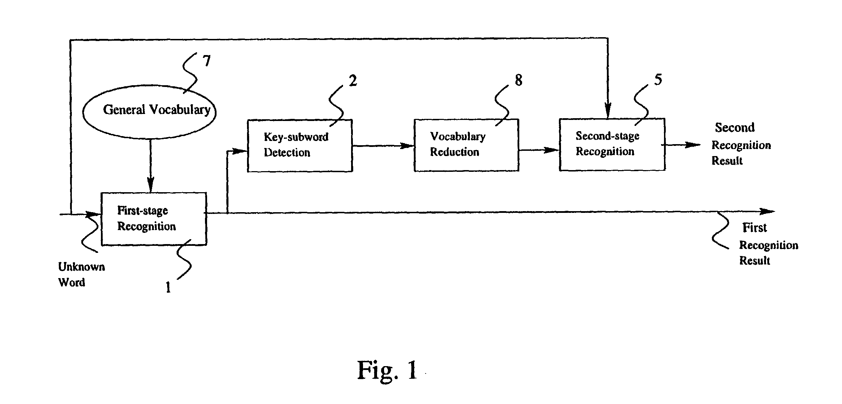

Fig. 1 shows the basic functionality of a speech recognizer according to the present invention. An unknown word is input to a first-stage recognition unit 1 which performs an automatic speech recognition on basis of a general vocabulary 7. The recognition result of the first-stage recognition unit 1 is output as a first recognition result. This first recognition result is input to a key-subword detection unit 2 in order to determine the category which applies to the input unknown word. As mentioned above, the category is dependent on one or more recognized key-subwords within the first recognition result. Based on the one or more detected key-subwords a vocabulary reduction unit 8 determines the vocabulary belonging to the category defined by the set of key-subwords output from the key-subword detection unit 2. After the vocabulary reduction a second stage recognition unit 5 performs a second automatic speech recognition on the same speech input, i. e. the same unknown word, based on the reduced vocabulary to obtain a second recognition result.

Of course, parts of the recognition process which are identical in the first stage recognition unit 1 and the second stage recognition unit 5 have only to be processed once, e. g. the sequence of feature vectors corresponding to the unknown word already calculated within the first stage recognition unit 1 does not have to be re-calculated within the second stage recognition unit 5. Also, the vocabulary reduction unit 8 does not have to store categories of the general vocabulary 7 so that every word within a category has to be stored separately and independently for that category again, but a category can also be defined just by references to the general vocabulary 7.

According to the present invention the first recognition result is output as recognition result in case no category is detected and the second recognition result is output in case a category is detected for an unknown word. In the first case the steps of vocabulary reduction and second stage recognition can be omitted.

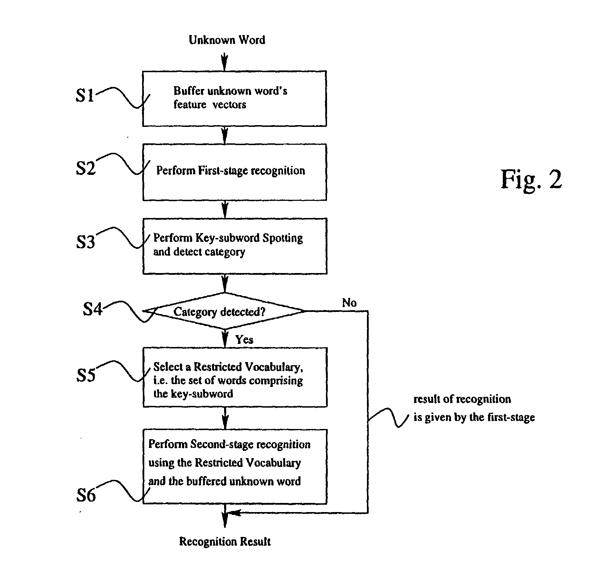

Fig. 2 shows a flow-chart of the method to recognize speech phrases according to the present invention. An unknown word input to the system is processed in a first step S1 to obtain its feature vectors which are then buffered. In a following step S2 the first stage recognition is performed on basis of the feature vectors buffered in step S1. Thereafter, in step S3 key-subword spotting is performed to detect the category of the unknown word based on the first recognition result of the first stage recognition performed in step S2. In step S4 it is decided whether a category could be detected in step S3. If this is the case in step S5 a restricted vocabulary is selected, e. g. the sets of words comprising all found key-subwords and/or the set of words related to all found key-subwords, whereafter in step S6 a second stage recognition is performed using the restricted vocabulary and the buffered feature vectors of the unknown word. In case a category was detected in step S3 the output of the second stage recognition performed in step S6 is the wanted recognition result. In case no category was detected in step S3, after step S4 directly the result of the first stage recognition performed in step S2 is output as recognition result.

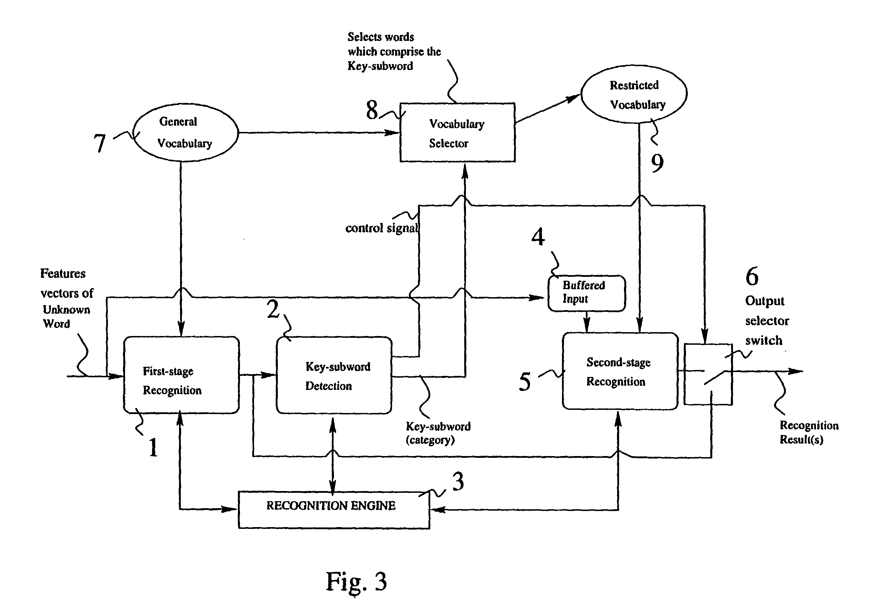

Fig. 3 shows a detailed block diagram of the speech recognizer according to the present invention. The feature vectors of an unknown word are input to the first stage recognition unit 1 and a buffer 4 which supplies them appropriately to the second stage recognition unit 5. The first stage recognition unit 1 determines the first recognition result on basis of the general vocabulary 7 and outputs it to an output selector switch 6 and the key-subword detection unit 2. The key-subword detection unit 2 determines a category according to the detected key-subwords and outputs this category to a vocabulary selector 8 which selects words from the general vocabulary 7 which comprise or are related to the found key-subwords. These selected words form a restricted vocabulary 9 based on which the second stage recognition unit 5 determines the second recognition result from the buffered input feature vectors of the unknown word which is also output to the output selector switch 6. Depending on whether the key-subword detection unit 2 could detect a category it outputs a control signal to the output selector switch 6 to select which of the first and second recognition results should be output as final recognition result.

Fig. 3 shows that the first stage recognition unit 1, the key-subword detection unit 2 and the second stage recognition unit 5 all perform a respective recognition or detection with the help of a recognition engine 3 which is respectively bi-directionally coupled to said units. As mentioned above, the present invention is independent from the respective lower level recognition algorithm used by the recognition engine 3. However, also separate recognition engines might be used.

Furthermore, as mentioned above in the general description of the inventive concept as alternative to the preferred embodiment of the invention, the key-subword detection might be performed independently from the first stage recognition result, e.g. based on the output of a lower level recognition engine, to reduce the vocabulary of a second stage recognition unit without even using any first stage recognition e.g. involving a keyword spotting technique. In this case no first stage recognition unit in the context of the example described in connection with Figs. 1 to 3 is necessary, i.e. only a lower level recognition engine which allows the key-subword detector to recognize key-subwords and which does not produce a recognition result on a word basis must be provided. Such a recognition engine might also be integrated within the respective key-subword detector.

Still further, in this case, the key-subword detection might also be loosely coupled with a first stage recognition unit producing recognition results so that the two recognition units may be considered independent and separated.

## Claims

1. Method to recognize speech phrases, comprising the following steps:
- performing a first stage recognition (S2) on a received unknown word by using a general vocabulary (7) to generate a first recognition result,
- performing key-subword spotting (S3) on the basis of said first recognition result to determine a category of a receivedunknown word,
- wherein a category is a set of words each comprising or semantically related to a set of at least one key-subword,
- in case a category is determined (S4):
- performing a second stage recognition (S6) on the received unknown word by using a restricted vocabulary (9) comprising only those words corresponding to the determined category to generate a second recognition result, and outputting said second recognition result as recognition result,
- in case no category is determined (S4No):
- outputting said first recognition result as recognition result.

2. Method according to claim 1, **characterized in that** a set of more than one key-subword might be found during the key-subword spotting (S3) to determine the category of the unknown word.

3. Method according to anyone of the preceding claims, **characterized in that** a key-subword is a part of a word which is recognizable.

4. Method according to anyone of the preceding claims, **characterized in that** the vocabulary (7) and/or a language model used in the first stage recognition (S2) and/or the second stage recognition (S6) is restricted according to additional/external knowledge about the unknown word to be recognized.

5. Speech recognizer, **characterized by**
- a first stage recognition unit (1) for performing a first stage recognition on a received unknown word by using a general vocabulary and for generating a first recognition result
- a key-subphrase detector (2) for performing key-subword spotting on basis of said first recognition result to determine a category of a received unknown word; and
- wherein a category is a set of words each comprising or semantically related to a set of at least one key-subword.
- a second stage recognition unit (5) for performing a second stage recogition on the received unknown word by using a restricted vocabulary comprising only those words corresponding to the determined category and for generating a second recognition result in case a category is determined by the key-subphrase detector (2).

6. Speech recognizer according to claim 5, **characterized in that** the first stage recognition unit (1), the key-subphrase detector (2), and/or the second stage recognition unit (6) perform a respective low-level speech recognition independently based on at least one recognition engine (3).

7. Speech recognizer according to claim 6, **characterized by** a vocabulary selector (8) which selects certain entries of the general vocabulary (7) on basis of predefined rules according to key-subwords input thereto to generate the restricted vocabulary (7).

## Patentansprüche

1. Verfahren zur Erkennung von Sprachphrasen, umfassend die folgenden Schritte:
- Durchführung einer ersten Erkennungsstufe (S2) für ein empfangenes unbekanntes Wort unter Verwendung eines allgemeinen Vokabulars (7), um ein erstes Erkennungsergebnis zu erzeugen,
- Durchführung einer Schlüsselteilwort-Erkennung (S3) auf Basis des ersten Erkennungsergebnisses, um eine Kategorie eines empfangenen unbekannten Wortes zu bestimmen
- wobei eine Kategorie eine Menge von Wörtern ist, wobei jedes Wort eine Menge von wenigstens einem Schlüsselteilwort umfasst oder einen semantischen Bezug zu einem solchen aufweist,
- falls eine Kategorie bestimmt wird (S4):
- Durchführen einer zweiten Erkennungsstufe (S6) für das empfangene unbekannte Wort unter Verwendung eines begrenzten Vokabulars (9), welches nur diejenigen Wörter umfasst, welche der bestimmten Kategorie entsprechen, um ein zweites Erkennungsergebnis zu erzeugen, und Ausgeben des zweiten Erkennungsergebnisses als Erkennungsergebnis,
- falls keine Kategorie bestimmt wird (S4No):
- Ausgeben des ersten Erkennungsergebnisses als Erkennungsergebnis.

2. Verfahren gemäß Anspruch 1, **dadurch gekennzeichnet, dass** eine Menge von mehr als einem Schlüsselteilwort während der Schlüsselteilwort-Erkennung gefunden werden kann (S3), um die Kategorie des unbekannten Wortes zu bestimmen.

3. Verfahren gemäß einem der vorhergehenden Ansprüche, **dadurch gekennzeichnet, dass** ein Schlüsselteilwort ein Teil eines Wortes ist, welches erkennbar ist.

4. Verfahren gemäß einem der vorhergehenden Ansprüche, **dadurch gekennzeichnet, dass** das Vokabular (7) und/oder ein während der ersten Erkennungsstufe (S2) und/oder der zweiten Erkennungsstufe (S6) verwendetes Sprachmodell in Übereinstimmung mit zusätzlichem/externem Wissen über das unbekannte zu erkennende Wort begrenzt ist.

5. Spracherkenner, **gekennzeichnet durch**
- eine erste Erkennungsstufeneinheit (1) zur Durchführung einer ersten Erkennungsstufe für ein empfangenes unbekanntes Wort unter Verwendung eines allgemeinen Vokabulars und zur Erzeugung eines ersten Erkennungsergebnisses,
- einen Schlüsselteilwortdetektor (2) zur Durchführung einer Schlüsselteilwort-Erkennung auf Basis des ersten Erkennungsergebnisses, um eine Kategorie eines empfangenen unbekannten Wortes zu bestimmen; und,
- wobei eine Kategorie eine Menge von Wörtern ist, wobei jedes Wort eine Menge von wenigstens einem Schlüsselteilwort umfasst oder einen semantischen Bezug zu einem solchen aufweist,
- eine zweite Erkennungsstufeneinheit (5) zur Durchführung einer zweiten Erkennungsstufe für das empfangene unbekannte Wort unter Verwendung eines begrenzten Vokabulars, welches nur die Wörter umfasst, welche der bestimmten Kategorie entsprechen, und zur Erzeugung eines zweiten Erkennungsergebnisses, für den Fall, dass von dem Schlüsselteilwortdetektor (2) eine Kategorie bestimmt wurde.

6. Spracherkenner nach Anspruch 5, **dadurch gekennzeichnet, dass** die erste Erkennungsstufeneinheit (1), der Schlüsselteilwortdetektor (2) und/oder die zweite Erkennungsstufeneinheit (6) eine entsprechende Niedrig-Niveau-Spracherkennung unabhängig duchführen, basierend auf wenigstens einem Erkennungs-Mechanismus (3).

7. Spracherkenner gemäß Anspruch 6, **gekennzeichnet durch** einen Vokabelauswähler (8), welcher bestimmte Einträge des allgemeinen Vokabulars (7) in Abhängigkeit vorbestimmter Regeln in Übereinstimmung mit in ihn eingegebenen Schlüsselteilwörtern auswählt, um das begrenzte Vokabular (7) zu erzeugen.

## Revendications

1. Procédé de reconnaissance de phrases vocales, comprenant les étapes suivantes consistant à:
- exécuter une reconnaissance à un premier échelon (S2) sur un mot inconnu reçu moyennant l'utilisation d'un vocabulaire général (7) pour générer un premier résultat de reconnaissance,
- exécuter un morcellement (S3) en sous-mots de code sur la base dudit premier résultat de reconnaissance pour déterminer une catégorie d'un mot inconnu reçu,
- selon lequel une catégorie est un ensemble de mots comprenant chacun ou associé d'une manière sémantique à un ensemble d'au moins un sous-mot de code,
- dans le cas où une catégorie est déterminée (S4) :
- exécuter une reconnaissance à un second échelon (S6) sur le mot inconnu reçu en utilisant un vocabulaire limité (9) comprenant uniquement les mots correspondant à la catégorie déterminée pour générer un second résultat de reconnaissance, et délivrer ledit second résultat de reconnaissance en tant que résultat de reconnaissance,
- dans le cas où aucune catégorie n'est déterminée (S4non):
- délivrer ledit premier résultat de reconnaissance en tant que résultat de reconnaissance.

2. Procédé selon la revendication 1, **caractérisé en ce qu'**un ensemble de plus d'un sous-mot de code peut être trouvé pendant le morcellement (S3) en sous-mots de code pour déterminer la catégorie du mot inconnu.

3. Procédé selon l'une quelconque des revendications précédentes, **caractérisé en ce qu'**un sous-mot de code fait partie d'un mot qui est reconnaissable.

4. Procédé selon l'une quelconque des revendications précédentes, **caractérisé en ce que** le vocabulaire (7) et un modèle de langage utilisé dans la reconnaissance à un premier échelon (S2) et/ou la reconnaissance à un second échelon (S6) est limité conformément à une connaissance additionnelle / externe concernant le mot inconnu devant être reconnu.

5. Dispositif de reconnaissance de la parole, **caractérisé par**
- une unité de reconnaissance à un premier échelon (1) pour exécuter une reconnaissance à un premier échelon sur un mot inconnu reçu moyennant l'utilisation d'un vocabulaire général et pour générer un premier résultat de reconnaissance,
- un détecteur de sous-phrase de code (2) pour exécuter le morcellement de sous-mots de code sur la base du premier résultat de reconnaissance pour déterminer une catégorie d'un mot inconnu reçu; et
- dans lequel une catégorie est un ensemble de mots comprenant chacun ou associé d'une manière sémantique à un ensemble d'au moins un sous-mot de code,
- une unité de reconnaissance à un second échelon (5) pour effectuer une reconnaissance à un second échelon sur le mot inconnu reçu moyennant l'utilisation d'un vocabulaire limité comprenant uniquement les mots correspondant à la catégorie déterminée et pour générer un second résultat de reconnaissance dans le cas où une catégorie déterminée par le détecteur de sous-phrases de code (2).

6. Dispositif de reconnaissance de la parole selon la revendication 5, **caractérisé en ce que** l'unité de reconnaissance à un premier échelon (1), le détecteur de sous-phrases de code (2) et/ou l'unité de reconnaissance à un second échelon (6) exécute une reconnaissance respective de la parole au niveau bas, ceci étant basé de façon indépendante sur au moins un moteur de reconnaissance (7).

7. Dispositif de reconnaissance de la parole selon la revendication 6, **caractérisé par** un sélecteur de vocabulaire (8) qui sélectionne certaines entrées du vocabulaire général (7) sur la base de règles prédéfinie conformément à des sous-mots de code qui y sont introduits pour générer le vocabulaire limité (7).
